# EUROPÄISCHE PATENTANMELDUNG

(11) **EP 3 648 201 A1**
(43) Veröffentlichungstag der Anmeldung: **06.05.2020**
(21) Anmeldenummer: 19205172.0
(22) Anmeldetag: 24.10.2019
(51) Int. Cl.: H01M 4/04, H01M 4/36, H01M 4/38, H01M 4/62, H01M 10/052, H01M 10/054, H01M 10/42, H01M 4/02

(54) **VERFAHREN ZUR ENTFERNUNG VON POTENTIELL WASSERSTOFF BILDENDEN VERBINDUNGEN AUS ELEKTROCHEMISCHEN ZELLEN**

(30) Priorität: 31.10.2018 DE 102018218614
(71) Anmelder: Robert Bosch GmbH, 70442 Stuttgart (DE)
(72) Erfinder: Sauter, Ulrich, 76199 Karlsruhe (DE); Berner, Ulrich, 70176 Stuttgart (DE)

(57) **Zusammenfassung**

Die Erfindung betrifft ein Verfahren zur Entfernung potentiell Wasserstoff bildenden Verbindungen aus einer elektrochemischen Zelle (1), wobei das Verfahren mindestens die folgenden Verfahrensschritte umfasst:
(i) Bereitstellen einer elektrochemischen Zelle (1), umfassend mindestens eine positive Elektrode (22), welche mindestens ein Wasserstoffabsorbierendes Material (50) umfasst;
(ii) Absenken des elektrischen Potentials der mindestens einen positiven Elektrode (21) auf einen Wert gegenüber dem Aktivmaterial der negativen Elektrode (21), welcher die Reduktion von potentiell Wasserstoff bildenden Verbindungen, die in der elektrochemischen Zelle (1) enthalten sind, an der positiven Elektrode (22) ermöglicht;
(iii) Reduktion der potentiell Wasserstoff bildenden Verbindungen an der positiven Elektrode (21) unter Bildung von elementarem Wasserstoff; und
(iv) Umsetzung des gebildeten Wasserstoffs mit dem mindestens einen Wasserstoff-absorbierenden Material (50), um diesen so zu binden.

Die Erfindung betrifft auch eine elektrochemische Zelle (1), mit welcher das erfindungsgemäße Verfahren durchführbar ist, ein Verfahren zur Herstellung einer solchen elektrochemischen Zelle (1) sowie die Verwendung der elektrochemischen Zelle (1) zur Durchführung des beschriebenen Verfahrens.

## Beschreibung

Gegenstand der Erfindung ist ein Verfahren zur Entfernung von potentiell Wasserstoff bildenden Verbindungen aus elektrochemischen Zellen. Das Verfahren setzt dazu eine elektrochemische Zelle ein, die ein Wasserstoff-absorbierendes Material umfasst. Gegenstand der Erfindung ist auch diese elektrochemische Zelle, ein Verfahren zu deren Herstellung sowie deren Verwendung.

### Stand der Technik

Elektrische Energie ist mittels Batterien speicherbar. Batterien wandeln chemische Reaktionsenergie in elektrische Energie um. Hierbei werden Primärbatterien und Sekundärbatterien unterschieden. Primärbatterien sind nur einmal funktionsfähig, während Sekundärbatterien, die auch als Akkumulator bezeichnet werden, wieder aufladbar sind. Eine Batterie umfasst dabei eine oder mehrere Batteriezellen.

In einem Akkumulator finden insbesondere sogenannte Lithium-Ionen-Batteriezellen Verwendung. Diese zeichnen sich unter anderem durch hohe Energiedichten, thermische Stabilität und eine äußerst geringe Selbstentladung aus. Lithium-Ionen-Batteriezellen kommen unter anderem in Kraftfahrzeugen, insbesondere in Elektrofahrzeugen zum Einsatz.

Lithium-Ionen-Batteriezellen weisen üblicherweise eine positive Elektrode, die auch als Kathode bezeichnet wird, und eine negative Elektrode, die auch als Anode bezeichnet wird, auf. Diese erfordern den Einsatz von Materialien mit sehr geringen Mengen an Verunreinigungen (Battery-grade). Hauptgrund dafür ist, dass Verunreinigungen je nach elektrochemischer Stabilität an den Elektroden abreagieren können und so an der Anode reduziert oder an der Kathode oxidiert werden. Dies kann zu festen Reaktionsprodukten in der Solid-Elektrolyt-Interface oder zu mobilen Reaktionsprodukten im Elektrolyt führen. Beides führt in der Regel zu nachteiligen Eigenschaften der elektrochemischen Zelle.

Aufgrund der hohen erreichbaren Energiedichten, ist ein Teil der derzeitigen Entwicklung auf elektrochemische Zellen gerichtet, welche metallisches Lithium als Aktivmaterial umfassen. Aufgrund seiner hohen Reaktivität stellt metallisches Lithium besondere Ansprüche an die Reinheit der eingesetzten Materialien.

US 2016/322631 und US 2012/064392 offenbaren elektrochemische Zellen, die ein Wasserstoff-absorbierendes Material enthalten. Ein Verfahren zur Entfernung von potentiell Wasserstoff bildenden Verbindungen wird nicht beschrieben.

### Offenbarung der Erfindung

Gegenstand der Erfindung ist ein Verfahren zur Entfernung potentiell Wasserstoff bildender Verbindungen aus einer elektrochemischen Zelle, wobei das Verfahren mindestens die folgenden Verfahrensschritte umfasst:
(i) Bereitstellen einer elektrochemischen Zelle, umfassend mindestens eine negative Elektrode (Anode), mindestens eine positive Elektrode (Kathode), mindestens einen Separator sowie mindestens einen Elektrolyt, wobei
   die mindestens eine negative Elektrode mindestens einen Stromsammler und mindestens ein Aktivmaterial umfasst, welches mindestens ein Alkali- und/oder Erdalkalimetall enthält;
   die mindestens eine positive Elektrode mindestens einen Stromsammler, mindestens ein Aktivmaterial und mindestens ein Wasserstoff absorbierendes Material umfasst;
   der mindestens eine Separator zwischen der mindestens einen negativen Elektrode und der mindestens einen positiven Elektrode angeordnet ist; und
   der mindestens eine Elektrolyt eine ionenleitfähige Verbindung zwischen der mindestens einen negativen Elektrode und der mindestens einen positiven Elektrode bereitstellt;
(ii) Absenken des elektrischen Potentials der positiven Elektrode (Kathodenpotential) auf einen Wert gegenüber dem Aktivmaterial der negativen Elektrode, welcher die Reduktion von potentiell Wasserstoff bildenden Verbindungen, die in der elektrochemischen Zelle enthalten sind, an der positiven Elektrode ermöglicht;
(iii) Reduktion der potentiell Wasserstoff bildenden Verbindungen an der positiven Elektrode unter Bildung von elementarem Wasserstoff; und
(iv) Umsetzung des gebildeten Wasserstoffs mit dem mindestens einen Wasserstoff absorbierenden Material, um diesen so zu binden.

Alkali- und/oder Erdalkalimetalle weisen eine hohe Reaktivität gegenüber vielen Verbindungen auf. Metallisches Lithium hat das geringste elektrochemische Potential aller Elemente (-3,04 V gegenüber Standard-Wasserstoff-Elektrode). Bei diesem Potential werden viele chemische Verbindungen, die in elektrochemische Zellen enthalten sein können, reduziert. Dazu gehören auch Wasser und Lösungsmittelmoleküle, die sich prozessbedingt in der elektrochemischen Zelle befinden können. Je nach Reaktion kann ein Reaktionsprodukt davon Wasserstoff sein. Ähnliche Reaktionen können mit anderen Alkali- und/oder Erdalkalimetallen beobachtet werden.

Von Wasserstoff ist bekannt, dass dieser mit Lithium zu Lithiumhydrid LiH reagieren kann. LiH bildet dabei vornehmlich grobe Strukturen auf der Oberfläche des Anodenaktivmaterials, die zum Teil aus der Oberfläche herausragen und beim Durchbrechen des Separators und einem dadurch gegebenenfalls auftretenden Kontakt mit der Kathode zu einem Kurzschluss führen können. Durch das erfindungsgemäße Verfahren ist es möglich unerwünschte, potentiell Wasserstoff bildende Verbindungen gezielt an der Kathode zu Wasserstoff zu reduzieren und diesen dort zu binden, bevor der Wasserstoff eine Reaktion mit dem Anodenaktivmaterial eingehen kann.

In einem ersten Verfahrensschritt wird hierzu eine elektrochemische Zelle bereitgestellt, die mindestens eine negative Elektrode (Anode), mindestens eine positive Elektrode (Kathode), mindestens einen Separator sowie mindestens einen Elektrolyt umfasst.

Die negative Elektrode der erfindungsgemäßen elektrochemischen Zelle (auch als Anode bezeichnet) umfasst mindestens ein Aktivmaterial, welches mindestens ein Alkali- und/oder Erdalkalimetall enthält. Das Aktivmaterial kann, sofern notwendig, in Form einer Aktivmaterialzusammensetzung vorliegen, die neben dem Aktivmaterial mindestens ein Bindemittel umfasst.

In einer Ausführungsform der Erfindung umfasst das Aktivmaterial der negativen Elektrode mindestens ein Alkalimetall, insbesondere Lithium und/oder Natrium, und/oder mindestens ein Erdalkalimetall, insbesondere Magnesium. Das mindestens eine Alkalimetall und/oder Erdalkalimetall kann in elementarer Form in der negativen Elektrode vorliegen, oder in Form von Verbindungen, umfassend Alkalimetall-Ionen und/oder Erdalkalimetall-Ionen. Als elementare Alkalimetalle sind insbesondere elementares Lithium und elementares Natrium zu nennen, die als Reinstoff oder in Form von Legierungen, insbesondere in Form von Legierungen mit anderen Alkalimetallen (z.B. LiNa, LiK) oder mit Erdalkalimetallen (z.B. LiMg, NaMg) vorliegen können. Als Alkalimetall-Ionen umfassende Verbindungen sind beispielsweise Alkalimetall enthaltende Mischoxide wie Lithiumtitanate (insbesondere LiₐTi₅O₁₂) oder Alkalimetall enthaltende Interkalationsverbindungen, insbesondere auf Grundlage von Kohlenstoff (insbesondere auf Grundlage von Graphit oder amorphem Kohlenstoff) oder Silizium (insbesondere auf Grundlage von nanokristallinem, amorphem Silizium), hervorzuheben. Als elementares Erdalkalimetall ist insbesondere elementares Magnesium zu nennen, das als Reinstoff oder in Legierungen, insbesondere in Legierungen mit Alkalimetallen (z.B. LiMg, NaMg) vorliegen kann. Als Erdalkalimetall-Ionen umfassende Verbindungen sind beispielsweise Erdalkalimetall enthaltende Interkalationsverbindungen, insbesondere auf Grundlage von Kohlenstoff (insbesondere auf Grundlage von Graphit oder amorphem Kohlenstoff) oder Silizium (insbesondere auf Grundlage von nanokristallinem, amorphem Silizium), hervorzuheben.

In einer bevorzugten Ausführungsform der Erfindung umfasst die negative Elektrode der elektrochemischen Zelle mindestens ein Aktivmaterial, welches Lithium umfasst.

In einer weiter bevorzugten Ausführungsform der erfindungsgemäßen elektrochemischen Zelle besteht das Aktivmaterial der negativen Elektrode im Wesentlichen aus elementarem Lithium (d.h. zu mindestens 95 Atom-%, vorzugsweise 98 Atom-%, insbesondere 99 Atom-%) oder aus Legierungen auf Grundlage von elementarem Lithium. Geeignete Legierungsmetalle sind insbesondere Alkali- und Erdalkalimetalle. Besonders hervorzuheben ist eine Legierung aus Lithium und Magnesium. Vorzugsweise umfasst eine erfindungsgemäße Lithium enthaltende Legierung mindestens 50 Atom-% elementares Lithium, stärker bevorzugt mindestens 70 Atom-% und insbesondere mindestens 85 Atom.-%, bezogen auf die gesamte Zusammensetzung der jeweiligen Legierung. Ein Bindemittel ist in diesem Fall nicht notwendig. Vorzugsweise liegt das elementare Lithium oder die Legierungen auf Basis von elementarem Lithium in Form einer Metallschicht mit einer Schichtdicke von 0,5 µm bis 20 µm vor.

Die negative Elektrode umfasst zudem mindestens einen Stromsammler. Dieser umfasst mindestens ein elektrisch leitfähiges Material, insbesondere ein Metall. Besonders bevorzugte Metalle sind Kupfer, Lithium, Nickel, Aluminium, Eisen, sowie Legierungen dieser Metalle miteinander oder mit anderen Metallen. In einer Ausführungsform der Erfindung besteht sowohl das Aktivmaterial als auch der Stromsammler der negativen Elektrode aus Lithium.

Die positive Elektrode der erfindungsgemäßen elektrochemischen Zelle (hierin auch als Kathode bezeichnet) umfasst mindestens ein Aktivmaterial sowie mindestens einen Stromsammler. Der Stromsammler ist aus einem elektrisch leitfähigen Material, insbesondere einem Metall, vorzugsweise Aluminium, gefertigt.

Als Aktivmaterial der positiven Elektrode kann prinzipiell jedes dem Fachmann bekannte Kathodenaktivmaterial eingesetzt werden, welches für den Einsatz in von Lithiumionen-Batterien geeignet ist. Als geeignete Kathodenaktivmaterialien hervorzuheben sind Schichtoxide wie Lithium-Nickel-Kobalt-Aluminium-Oxide (NCA; z.B. LiNi_{0,8}Co_{0,15}Al_{0,05}O₂), Lithium-Nickel-Kobalt-Mangan-Oxide (NCM; z.B. LiNi_{0,8}Mn_{0,1}Co_{0,1}O₂ (NMC (811)), LiNi_{0,33}Mn_{0,33}Co_{0,33}O₂ (NMC (111)), LiNi_{0,5}Mn_{0,3}Co_{0,2}O₂ (NMC (532)), LiNi_{0,6}Mn_{0,2}Co_{0,2}O₂ (NMC (622)), oder Hochenergie- Lithium-Nickel-Kobalt-Mangan-Oxide (überlithiierte Lithium-Nickel-Kobalt-Mangan-Oxide), LiCoO₂, Olivine wie Lithium-Eisen-Phosphat (LiFePO₄, LFP), Lithium-Mangan-Phosphat (LMP) oder Lithium-Kobalt-Phosphat (LCP), Spinelle wie LiMn₂O₄, Li₂MnO₃, Li_{1.17}Ni₀.₁₇Co_{0.1}Mn_{0.56}O₂ oder LiNiO₂, Lithiumreiche FCC wie Li₂MO₂F (mit M = V, Cr), Konversionsmaterialien wie FeF₃, und schwefelhaltige Materialien wie Schwefel-Polyacrylnitril-Komposite (SPAN).

Zudem wird das Kathodenaktivmaterial vorzugsweise in Form einer Aktivmaterialzusammensetzung in Kombination mit Bindemitteln und/oder elektrischen Leitadditiven eingesetzt, um die Stabilität bzw. die elektrische Leitfähigkeit zu erhöhen. Geeignete Bindemittel für das Kathodenaktivmaterial sind insbesondere Carboxymethylcellulose (CMC), Styrol-Butadien-Copolymer (SBR), Polyvinylidenfluorid (PVDF), Polytetrafluorethen (PTFE), Polyacrylnitril (PAN) und Ethylen-Propylen-Dien-Terpolymer (EPDM). Alternativ können in einer bevorzugten Ausführungsform auch einer oder mehrere der nachfolgend beschriebenen Polymerelektrolyte als Bindemittel eingesetzt werden. Als geeignete elektrische Leitadditive sind Leitruß, Graphit und Kohlenstoffnanoröhrchen zu nennen.

Zudem umfasst die positive Elektrode mindestens ein Wasserstoff-absorbierendes Material. Das mindestens eine Wasserstoff-absorbierende Material zeichnet sich dadurch aus, dass es eine hohe Affinität gegenüber elementarem Wasserstoff aufweist. Vorzugsweise ist die Affinität zur Reaktion mit Wasserstoff größer als die Affinität des Alkali- und/oder Erdalkalimetalls aus der negativen Elektrode zur Reaktion mit Wasserstoff. Zudem bildet sich durch die Reaktion des Wasserstoff-absorbierenden Materials mit dem elementaren Wasserstoff eine Verbindung, vorzugsweise eine Hydrid-Verbindung, aus, welche chemisch stabil ist, insbesondere auch unter den in der elektrochemischen Zelle vorliegenden Bedingungen, d.h. auch während des Betriebs derselben. Geeignete Wasserstoff-absorbierende Materialien umfassen in der Regel mindestens ein Element, ausgewählt aus der Gruppe, umfassend Yttrium, Zirkonium, Niob, Lanthan, Hafnium und Neodym, in elementarer Form und/oder als Legierung miteinander oder mit weiteren Elementen. Geeignete Legierungen umfassen insbesondere Zr₅₇V₃₆Fe₇ und/oder TiZrV. In einer besonders bevorzugten Ausführungsform der Erfindung werden jedoch keine Legierungen eingesetzt. Dies vereinfacht den Herstellungsprozess der elektrochemischen Zelle weiter.

Die molare Menge an Wasserstoff-absorbierendem Material entspricht vorzugsweise den in der elektrochemischen Zelle erwarteten molaren Mengen an potentiell Wasserstoff bildenden Verbindungen. Vorzugsweise liegt das molare Verhältnis von Wasserstoff-absorbierendem Material zu den erwarteten molaren Mengen an potentiell Wasserstoff bildenden Verbindungen in der elektrochemischen Zelle in einem Bereich von 1:1 bis 1:2, stärker bevorzugt in einem Bereich von 1:1 bis 1:1,5 und insbesondere in einem Bereich von 1:1 bis 1:1,2. Ein Verhältnis von weniger als 1:1 führt zu einer nicht ausreichende Absorption des Wasserstoffs an der Kathode der elektrochemischen Zelle. Wird ein Verhältnis von Wasserstoff-absorbierendem Material zu den erwarteten molaren Mengen an potentiell Wasserstoff bildenden Verbindungen in der elektrochemischen Zelle von mehr als 1:2 eingesetzt, so wird die Energiedichte der elektrochemischen Zelle unnötig reduziert, da die Menge an Material in der elektrochemischen Zelle, welches nicht zur Energiespeicherung beiträgt, ansteigt. Eine solche Reduktion der Energiedichte ist in der Regel nicht erwünscht.

Prinzipiell kann das Wasserstoff-absorbierende Material erfindungsgemäß an jeder beliebigen Position in der positiven Elektrode oder auf mindestens einem Teil der Oberfläche der positiven Elektrode angeordnet sein, solange hierdurch deren funktionsweise nicht beeinträchtig wird. Das das Wasserstoff-absorbierende Material kann insbesondere homogen in der Aktivmaterialzusammensetzung der positiven Elektrode verteilt sein, oder als zusammenhängenden Schicht in oder benachbart zu der positiven Elektrode angeordnet sein, z.B. als Beschichtung auf mindestens einem Teil der Oberfläche der positiven Elektrode. Auch Kombinationen dieser Anordnungen sind denkbar und erfindungsgemäß.

In einer Ausführungsform liegt das Wasserstoff-absorbierende Material in Form einer kontinuierlichen oder diskontinuierlichen Schicht vor. Eine solche kontinuierliche Schicht weist vorzugsweise eine Schichtdicke von mindestens 5 nm, stärker bevorzugt 10 bis 1000 nm, und insbesondere 50 bis 500 nm, auf. Diskontinuierliche Schichten umfassen beispielsweise Schichten mit Lochmuster oder in Form von Lamellen aber auch eine Vielzahl einzelner Partikel, die gleichmäßig in der positiven Elektrode und/oder auf mindestens einer Oberfläche der positiven Elektrode verteilt angeordnet sind. Ebenfalls möglich ist die Anordnung in Form dünner Schichten unmittelbar auf dem Stromsammler der positiven Elektrode. Sofern sich hierdurch unterscheidbare Schichten ergeben, weise diese vorzugsweise ebenfalls eine Schichtdicke von mindestens 5 nm, stärker bevorzugt 10 bis 1000 nm, und insbesondere 50 bis 500 nm, auf.

In einer alternativen Ausführungsform der Erfindung ist das Wasserstoff-absorbierende Material vorzugsweise als Partikel oder auf atomarer Ebene in der Aktivmaterialzusammensetzung der positiven Elektrode verteilt. Hierbei sind sowohl homogene Verteilungen möglich, als auch Verteilungen die einen Konzentrationsgradienten aufweisen. Vorzugsweise steigt ein solcher Konzentrationsgradient mit abnehmendem Abstand zum Stromsammler an. Wird das Wasserstoff-absorbierende Material in Form von Partikeln eingesetzt weisen diese vorzugsweise einen durchschnittlichen Partikeldurchmesser von 0,1 bis 50 nm, insbesondere 0,5 bis 10 nm, auf.

In einer weiteren alternativen Ausführungsform kann das Wasserstoff-absorbierende Material als Beschichtung auf mindestens einem Teil der Oberfläche mindestens eines der weiteren Bestandteile der Aktivmaterialzusammensetzung der positiven Elektrode, insbesondere auf der Oberfläche der Kathodenaktivmaterialpartikel, angeordnet sein. Die Beschichtung weist dabei vorzugsweise eine Schichtdicke von nicht mehr als 10 % des mittleren Teilchendurchmessers der Kathodenaktivmaterialpartikel auf.

Auch eine Kombination der beschriebenen Anordnungen ist denkbar. Die erfindungsgemäße elektrochemische Zelle umfasst daher mindestens ein Wasserstoff-absorbierendes Material, welches in Form von Atomen, Partikeln und/oder Schichten vorliegt.

Schichten des Wasserstoff-absorbierenden Materials können insbesondere durch Verfahren wie physikalische Dampfphasenabscheidungsverfahren (PVD), chemische Dampfphasenabscheidungsverfahren (CVD), und Sprühverfahren hergestellt werden. Konzentrationsgradienten können insbesondere durch Verfahren hergestellt werden, in denen das Wasserstoff-absorbierenden Material zeitgleich mit einem weiteren Material, insbesondere einem Kathodenaktivmaterial, mittels eines der beschriebenen Verfahren abgeschieden wird.

In Hinblick auf die Einfachheit der Herstellung der positiven Elektrode, wird das Wasserstoff absorbierende Material besonders bevorzugt in Form von Partikeln in die positive Elektrode bzw. die Aktivmaterialzusammensetzung der positiven Elektrode eingearbeitet.

Die erfindungsgemäße elektrochemische Zelle umfasst zudem mindestens einen Separator. Der Separator dient der Aufgabe, die Elektroden vor einem direkten Kontakt miteinander zu schützen und so einen Kurzschluss zu unterbinden. Gleichzeitig muss der Separator den Transfer der Ionen von einer Elektrode zur anderen gewährleisten. Geeignete Separatormaterialien zeichnen sich dadurch aus, dass sie aus einem isolierenden Material mit einer porösen Struktur gebildet sind. Geeignete Separatormaterialien sind insbesondere Polymere, wie Cellulose, Polyolefine, Polyester und fluorierte Polymere. Besonders bevorzugte Polymere sind Cellulose, Polyethylen (PE), Polypropylen (PP), Polyethylenterephthalat (PET), Polytetrafluorethen (PTFE) und Polyvinylidenfluorid (PVDF). Ferner kann der Separator keramische Materialen umfassen oder aus diesen bestehen, sofern ein weitgehender Ionen-Transfer zwischen den Elektroden gewährleistet ist. Der Separator kann aus einer Schicht aus einem oder mehreren der zuvor genannten Separatormaterialien bestehen oder auch aus mehreren Schichten, in denen jeweils eines oder mehrere der genannten Separatormaterialien miteinander kombiniert sind.

Zudem umfasst die elektrochemische Zelle mindestens einen Elektrolyt. Dieser kann ausgewählt sein aus einem Flüssigelektrolyt oder einem Festelektrolyt.

Ein Flüssigelektrolyt im Sinne dieser Erfindung ist eine Lösung eines Leitsalzes in einem geeigneten Lösungsmittel. Geeignete Lösungsmittel weisen eine ausreichende Polarität auf, um die weiteren Bestandteile des Flüssigelektrolyten, insbesondere das Leitsalz bzw. die Leitsalze zu lösen. Als Beispiele zu nennen sind Acetonitril, Tetrahydrofuran, oder y-Butyrolacton sowie cyclische und acyclische Carbonate, insbesondere Propylencarbonat, Ethylencarbonat, Dimethylcarbonat, Diethylcarbonat, Ethylenmethylcarbonat, Ethylmethylcarbonat sowie Gemische davon. Besonders bevorzugt sind Acetonitril, Propylencarbonat, Ethylencarbonat, Dimethylcarbonat, Diethylcarbonat, Ethylenmethylcarbonat, Ethylmethylcarbonat sowie Gemische davon.

Ferner umfasst der Flüssigelektrolyt mindestens ein Leitsalz, insbesondere mindestens ein Alkali- und/oder Erdalkalimetallsalz. Das Leitsalz kann beispielsweise ausgewählt sein aus der Gruppe bestehend aus Halogeniden, Alkoholaten, Perchloraten, Tetrafluorboraten, Hexafluorphosphaten, Hexafluorarsenaten, Trifluormethansulfonaten, Bis(trifluormethylsulphonyl)imiden, Bis(pentafluorethylsulphonyl)imiden, Bis(oxalato)boraten, Difluor(oxalato)boraten, Tri(pentafluorethyl)trifluorphosphaten der jeweiligen Alkali- und/oder Erdalkalimetalle, sowie Kombinationen davon. Sofern das Aktivmaterial der negativen Elektrode der elektrochemischen Zelle Lithium umfasst, wird als Leitsalz vorzugsweise ein Lithiumsalz verwendet, welches insbesondere ausgewählt sein kann aus der Gruppe bestehend aus Lithiumhalogeniden (LiCI, LiBr, Lil, LiF), Lithiumalkoholaten (LiOMe, LiOEt, LiOⁿPr, LiOⁱPr, LiOⁿBu, LiO^{t}Bu, LiOⁱBu) Lithiumperchlorat (LiClO₄), Lithiumtetrafluorborat (LiBF₄), Lithiumhexafluorphosphat (LiPF₆), Lithiumhexafluorarsenat (LiAsF₆), Lithiumtrifluormethansulfonat (LiSO₃CF₃), Lithiumbis(trifluormethylsulphonyl)imid (LiN(SO₂CF₃)₂), Lithiumbis(pentafluorethylsulphonyl)imid (LiN(SO₂C₂F₅)₂), Lithiumbis(oxalato)borat (LiBOB, LiB(C₂O₄)₂), Lithiumdifluor(oxalato)borat (LiBF₂(C₂O₄)), Lithiumtri(pentafluorethyl)trifluorphosphat (LiPF₃(C₂F₅)₃) und Kombinationen davon.

Darüber hinaus kann der Flüssigelektrolyt Additive umfassen, die der Verbesserung der Eigenschaften der Solid Electrolyte Interphase dienen. Als Beispiele zu nennen sind zyklische Sulfonate wie 1,3-Propansulton.

Als Festelektrolyte sind ionenleitende Materialien auf Grundlage von organischen Polymeren und/oder anorganischen Materialien wie Gläsern (z.B. sulfidische Festelektrolyte) und/oder keramischen Materialien (z.B. oxidische Festelektrolyte) geeignet. Solche Materialien sind dem Fachmann bekannt und können allein oder in Kombination miteinander eingesetzt werden. Besonders hervorzuheben sind Festelektrolyte auf Grundlage von Polyalkylenoxiden, insbesondere Polyethylenoxid, in Kombination mit mindestens einem der vorgenannten Leitsalze.

Sofern in der elektrochemischen Zelle ein Festelektrolyt eingesetzt wird, kann in der Regel auf die Verwendung eines zusätzlichen Separators verzichtet werden. In diesem Fall ist der Festelektrolyt zwischen der mindestens einen negativen Elektrode und der mindestens einen positiven Elektrode angeordnet und trennt diese voneinander. Der Festelektrolyt übernimmt so die Funktion des Separators und des Elektrolyten.

In einem zweiten Verfahrensschritt (ii) wird das elektrische Potential der positiven Elektrode (Kathodenpotential) auf einen Wert gegenüber dem Aktivmaterial der negativen Elektrode abgesenkt, welcher die Reduktion von potentiell Wasserstoff bildenden Verbindungen, die in der elektrochemischen Zelle enthalten sein können, an der positiven Elektrode ermöglicht.

Wird in der negativen Elektrode ein Lithium enthaltendes Aktivmaterial eingesetzt, so wird das elektrochemische Potential auf einen Wert von weniger als 3 V gegenüber Li/Li⁺ abgesenkt. Vorzugsweise wird das das elektrische Potential der positiven Elektrode in einer elektrochemischen Zelle, die mindestens eine negative Elektrode enthält, die mindestens ein Aktivmaterial umfasst, welches Lithium umfasst, das elektrische Potential der mindestens einen positiven Elektrode auf einen Wert von ≤ 2,5V gegenüber Li/Li⁺, stärker bevorzugt ≤ 2,2 V gegenüber Li/Li⁺ und insbesondere ≤ 2,0 V gegenüber Li/Li⁺ abgesenkt. In einer Ausführungsform dieses Aspekts der Erfindung wird das elektrische Potential der positiven Elektrode auf einen Wert von ≤ 1,7 V gegenüber Li/Li⁺ abgesenkt. In einer Ausführungsform dieses Aspekts der Erfindung wird das elektrische Potential der positiven Elektrode auf einen Wert von ≤ 1,5 V gegenüber Li/Li⁺ abgesenkt.

Die Absenkung des Kathodenpotentials erfolgt beispielsweise durch einen Potentialsprung oder einen Potentialsweep. Diese Verfahren sind dem Fachmann bekannt.

Die Absenkung des Kathodenpotentials wird vorzugsweise vor dem ersten Aufladen der elektrochemischen Zelle durchgeführt. Nur so ist es möglich, die Menge an potentiell Wasserstoff bildenden Verbindungen in der elektrochemischen Zelle zu reduzieren und den entstehenden Wasserstoff durch das Wasserstoff absorbierende Material zu binden, bevor der Wasserstoff mit den weiteren Bestandteilen der elektrochemischen Zelle, insbesondere mit dem Aktivmaterial der negativen Elektrode, reagieren kann.

Die Absenkung des Kathodenpotentials wird vorzugsweise über einen Zeitraum von mindestens 1 Sekunde, vorzugsweise mindestens 1 Minute, insbesondere mindestens 5 Minuten, und weniger als 1 Stunde, vorzugsweise weniger als 30 Minuten, insbesondere weniger als 15 Minuten, durchgeführt. Dieser Zeitraum ist ausreichend, um die potentiell Wasserstoff bildenden Verbindungen in der elektrochemischen Zelle umzusetzen, ohne die weiteren Bestandteile der elektrochemischen Zelle zu schädigen.

Durch die Absenkung des Kathodenpotentials können die unerwünschten potentiell Wasserstoff bildenden Verbindungen an der positiven Elektrode unter Bildung von elementarem Wasserstoff, d.h. atomarem und/oder molekularem Wasserstoff, reduziert werden (Verfahrensschritt (iii)).

Potentiell Wasserstoff bildende Verbindungen in Sinne dieser Erfindung sind chemische Verbindungen, die mindestens ein kovalent gebundenes Wasserstoffatom umfassen, welches von Alkali- und/oder Erdalkalimetallen in der elektrochemischen Zelle zu Wasserstoff reduziert werden kann. Besonders unerwünschte, potentiell Wasserstoff bildende Verbindungen sind solche, die mindestens eine kovalente Bindung zwischen einem Wasserstoffatom und einem Sauerstoffatom (H-O), einem Wasserstoffatom und einem Schwefelatom (H-S), einem Wasserstoffatom und einem Stickstoffatom (H-N), und/oder einem Wasserstoffatom und einem Kohlenstoffatom (H-C) umfassen.

Weiterhin weisen potentiell Wasserstoff bildende Verbindungen im Sinne dieser Erfindung eine ausreichende Mobilität innerhalb der elektrochemischen Zelle auf. Das bedeutet, dass diese bei den Betriebsbedingungen der elektrochemischen Zelle in der Regel in flüssiger Form vorliegen.

Häufig in elektrochemischen Zellen vorliegende, potentiell Wasserstoff bildende Verbindungen umfassen üblicherweise bei der Herstellung der Elektroden eingesetzte Lösungsmittel wie Wasser, Tetrahydrofuran (THF), Cyclohexanon oder N-Methylpyrrolidon (NMP).

Durch die Absenkung des Kathodenpotentials wird durch Reduktion der potentiell Wasserstoff bildenden Verbindungen elementarer (d.h. atomarer und / oder molekularer) Wasserstoff an der positiven Elektrode und somit in unmittelbarer räumlicher Nähe zu dem ebenfalls in oder an der positiven Elektrode enthaltenen Wasserstoff-absorbierenden Material gebildet. Die verbleibenden Bestandteile der Wasserstoff bildenden Verbindungen reagieren bevorzugt zu unlöslichen Substanzen (z.B. Oxiden) ab.

In einem weiteren Verfahrensschritt (iv) wird der in Verfahrensschritt (iii) gebildete Wasserstoff (sowie ggf. in der elektrochemischen Zelle bereits vorhandener elementarer Wasserstoff) mit dem mindestens einen Wasserstoff absorbierenden Material in oder an der der positiven Elektrode umgesetzt und so gebunden. Die Migration des Wasserstoffs zur negativen Elektrode sowie die Reaktion desselben mit dem Aktivmaterial der negativen Elektrode werden so effektiv verhindert. Aufgrund der hohen Reaktivität des Wasserstoffs gegenüber dem Wasserstoff-absorbierenden Material findet die Reaktion auch bei Temperaturen in einem Bereich von 10 bis 40°C innerhalb kürzester Zeit, insbesondere innerhalb eines Zeitraums von weniger als 1 Stunde statt.

Durch das erfindungsgemäße Verfahren können mindestens 90 Gew.-% der unerwünschten, in der elektrochemischen Zelle enthaltenden, potentiell Wasserstoff bildenden Verbindungen umgesetzt werden, vorzugsweise mindestens 95 Gew.-%, bezogen auf das Gesamtgewicht der unerwünschten potentiell Wasserstoff bildenden Verbindungen in der elektrochemischen Zelle.

Gegenstand der Erfindung ist auch die zuvor beschriebene elektrochemische Zelle, mit welcher das erfindungsgemäße Verfahren durchgeführt werden kann. Gegenstand der Erfindung ist auch ein Verfahren zur Herstellung einer erfindungsgemäßen elektrochemischen Zelle, wobei das Wasserstoff-absorbierende Material mittels eines physikalischen Dampfphasenabscheidungsverfahrens (PVD), eines chemischen Dampfphasenabscheidungsverfahrens (CVD), eines Sprühverfahrens und/oder eines Sputtering-Verfahrens, auf mindestens einem Teil einer Oberfläche der positiven Elektrode der elektrochemischen Zelle aufgebracht und/oder in Form von Partikeln oder einer Partikelbeschichtungen in mindestens einen Teil der positiven Elektrode der elektrochemische Zelle eingebracht wird.

Gegenstand der Erfindung ist auch die Verwendung der erfindungsgemäßen elektrochemischen Zelle, insbesondere erhalten nach dem erfindungsgemäßen Verfahren, zur Durchführung des erfindungsgemäßen Verfahrens. Die elektrochemische Zelle kann zudem beispielsweise in einem Fahrzeug, insbesondere in einem Fahrzeug mit einem herkömmlichen Verbrennungsmotor (ICE), in einem Elektrofahrzeug (EV), in einem Hybridfahrzeug (HEV), oder in einem Plug-In-Hybridfahrzeug (PHEV), Verwendung finden.

### Vorteile der Erfindung

Das erfindungsgemäße Verfahren ermöglicht die effektive und rasche Entfernung von Wasserstoff und unerwünschten, potentiell Wasserstoff bildenden Verbindungen aus einer elektrochemischen Zelle. Durch die Absenkung des Kathodenpotentials werden unerwünschte potentiell Wasserstoff bildende Verbindungen, die in der elektrochemischen Zelle vorhanden sein können, zu Wasserstoff reduziert, welcher anschließend mit einem Wasserstoff absorbierenden Material umgesetzt wird. Die Reaktion des Wasserstoffs oder der potentiell Wasserstoff bildenden Verbindungen mit den weiteren Bestandteilen der elektrochemischen Zelle kann so effektiv unterbunden werden. Insbesondere findet im Wesentlichen keine Reaktion mit dem in der Anode enthaltenen Alkali- und/oder Erdalkalimetall statt, da die Erzeugung und Umsetzung des Wasserstoffs unmittelbar an und/oder in der Kathode durchgeführt wird. Aufgrund der Anwesenheit eines Wasserstoff-absorbierenden Materials kann die Gesamtmenge an Alkali- und/oder Erdalkalimetall in der negativen Elektrode somit reduziert werden, da durch das Wasserstoff-absorbierende Material weniger unerwünschte Reaktionen der Alkali- und/oder Erdalkalimetalle mit dem Wasserstoff auftreten. Da die während der Reduktion der potentiell Wasserstoff bildenden Verbindungen entstehenden Nebenprodukte (insbesondere unlösliche Oxide) ebenfalls in unmittelbarer Nähe zur positiven Elektrode entstehen, und diese im Vergleich zur negativen Elektrode eine große Oberfläche aufweist, sind die hieraus möglicherweise entstehenden negativen Einflüsse auf die Performance der elektrochemischen Zelle vergleichsweise gering.

Die Herstellung der erfindungsgemäßen elektrochemischen Zelle ist einfach durchführbar, da das Wasserstoff-absorbierende Material mittels einfacher Verfahren in die positive Elektrode eingebracht werden kann. Diese Verfahren können leicht in bestehende Herstellungsverfahren integriert werden. Aufwändige Verfahrensschritte wie PVD-Verfahren sind zwar möglich, jedoch nicht notwendig.

Durch die große Oberfläche, welche die positive Elektrode im Vergleich zur negativen Elektrode bietet, ist eine schnelle Reaktionskinetik bei der Umsetzung des gebildeten Wasserstoffs möglich, sodass an der negativen Elektrode im Wesentlichen keine Reaktionen mit Wasserstoff stattfinden und somit auch keine daraus entstehenden Reaktionsprodukte, wie LiH, gebildet werden.

### Kurze Beschreibung der Zeichnungen

Ausführungsbeispiele der Erfindung werden anhand einer Zeichnung und der nachfolgenden Beschreibung näher erläutert:

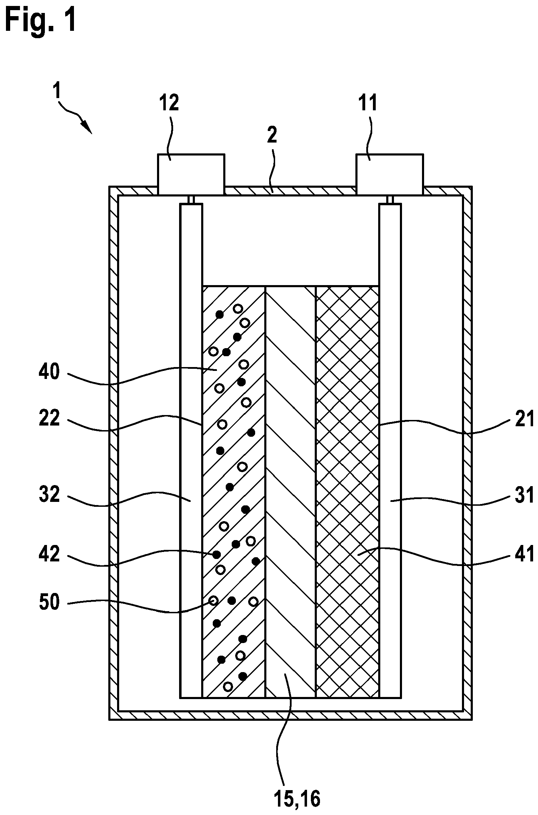

- Figur 1: zeigt die schematische Darstellung einer erfindungsgemäßen elektrochemischen Zelle.

### Ausführungsformen der Erfindung

In Figur 1 ist der Aufbau einer erfindungsgemäßen elektrochemischen Zelle 1 schematisch dargestellt. Eine positive Elektrode 22 und eine negative Elektrode 21 sind in einem Zellgehäuse 2 angeordnet. Die positive Elektrode 22, umfassend einen Stromsammler 32 und mindestens eine Aktivmaterialzusammensetzung 40, ist über den Stromsammler 32 mit dem positiven Terminal 12 verbunden. Die Aktivmaterialzusammensetzung 40 der positiven Elektrode 22 umfasst beispielsweise ein partikelförmiges NCM- oder NCA-Mischoxid als Aktivmaterial 42 sowie ggf. Bindemittel und Leitadditive. Ferner umfasst die Aktivmaterialzusammensetzung 40 mindestens ein Wasserstoff-absorbierendes Material 50, beispielsweise Yttrium. Das Wasserstoff-absorbierende Material 50 ist vorliegend beispielsweise in Form von Yttrium-Partikeln in die Aktivmaterialzusammensetzung 40 eingebracht und homogen darin verteilt. Der Stromsammler 32 ist vorzugsweise aus einem Metall gefertigt, z.B. aus Aluminium. Gegenüberliegend befindet sich eine negative Elektrode 21, die ebenfalls ein Aktivmaterial 41 und einen Stromsammler 31 umfasst, über welchen die negative Elektrode 21 zur Ableitung mit dem negativen Terminal 11 verbunden ist. Das Aktivmaterial 41 der negativen Elektrode 21 besteht vorzugsweise aus elementarem Lithium und ist auf einem Teil der Oberfläche des Stromsammlers 31, welcher ebenfalls aus Lithium gefertigt sein kann, angeordnet. Zwischen der positiven Elektrode 22 und der negativen Elektrode 21 ist der Separator 15 angeordnet, welcher vorliegend als Festelektrolyt ausgeführt ist und somit auch die Funktion des Elektrolyten 16 übernimmt.

Bei der Durchführung des erfindungsgemäßen Verfahrens wird das elektrische Potential der positiven Elektrode 22 (Kathodenpotential) auf einen Wert von weniger als 3 V gegenüber Li/Li⁺ abgesenkt. Dadurch werden unerwünschte, in der elektrochemischen Zelle 1 enthaltende, potentiell Wasserstoff bildende Verbindungen, insbesondere Lösungsmittel wie Wasser, NMP, THF oder Cyclohexanon, unmittelbar an der positiven Elektrode 22 reduziert. Der dabei entstehende elementare Wasserstoff wird durch das enthaltene Wasserstoff-absorbierende Material 50 abgefangen und eine Migration des Wasserstoffs zur negativen Elektrode 21 wird verhindert. Nach einem Zeitraum von beispielsweise 1 Sekunden bis 5 Minuten sind -je nach Menge der in der elektrochemischen Zelle 1 enthaltenen, unerwünschten, potentiell Wasserstoff bildende Verbindungen - können so mindestens 90 Gew.-% der unerwünschten, potentiell Wasserstoff bildenden Verbindungen umgesetzt werden.

Die Erfindung ist nicht auf die hier beschriebenen Ausführungsbeispiele und die darin hervorgehobenen Aspekte beschränkt. Vielmehr ist innerhalb des durch die Ansprüche angegebenen Bereichs eine Vielzahl von Abwandlungen möglich, die im Rahmen fachmännischen Handelns liegen.

## Patentansprüche

1. Verfahren zur Entfernung potentiell Wasserstoff bildender Verbindungen aus einer elektrochemischen Zelle (1), wobei das Verfahren mindestens die folgenden Verfahrensschritte umfasst:
(i) Bereitstellen einer elektrochemischen Zelle (1), umfassend mindestens eine negative Elektrode (21), mindestens eine positive Elektrode (22), mindestens einen Separator (15) und mindestens einen Elektrolyt (16), wobei
die mindestens eine negative Elektrode (21) mindestens einen Stromsammler (31) und mindestens ein Aktivmaterial (41) umfasst, welches mindestens ein Alkali- und/oder Erdalkalimetall enthält;
die mindestens eine positive Elektrode (22) mindestens einen Stromsammler (32), mindestens ein Aktivmaterial (42) und mindestens ein Wasserstoff-absorbierendes Material (50) umfasst;
der mindestens eine Separator (15) zwischen der mindestens einen negativen Elektrode (21) und der mindestens einen positiven Elektrode (22) angeordnet ist; und
der mindestens eine Elektrolyt (16) eine ionenleitfähige Verbindung zwischen der mindestens einen negativen Elektrode (21) und der mindestens einen positiven Elektrode (22) bereitstellt;
(ii) Absenken des elektrischen Potentials der mindestens einen positiven Elektrode (22) auf einen Wert gegenüber dem Aktivmaterial der negativen Elektrode (21), welcher die Reduktion von potentiell Wasserstoff bildenden Verbindungen, die in der elektrochemsichen Zelle (1) enthalten sind, an der positiven Elektrode (22) ermöglicht;
(iii) Reduktion der potentiell Wasserstoff bildenden Verbindungen an der positiven Elektrode (22) unter Bildung von elementarem Wasserstoff; und
(iv) Umsetzung des gebildeten elementaren Wasserstoffs mit dem mindestens einen Wasserstoff-absorbierenden Material (50), um diesen so zu binden.

2. Verfahren nach Anspruch 1, wobei die mindestens eine negative Elektrode (21) mindestens ein Aktivmaterial (41) umfasst, welches Lithium umfasst, und wobei in Verfahrensschritt (ii) das elektrische Potential der mindestens einen positiven Elektrode (22) auf einen Wert von weniger als 2,5 V gegenüber Li/Li⁺, vorzugsweise auf einen Wert von weniger als 2,0 V gegenüber Li/Li⁺ abgesenkt wird.

3. Verfahren nach Anspruch 1 oder 2, wobei das mindestens eine Wasserstoff-absorbierende Material (50) mindestens ein Element, ausgewählt aus der Gruppe, bestehend aus Yttrium, Zirkonium, Niob, Lanthan, Hafnium und Neodym, in elementarer Form oder als Legierung miteinander oder mit weiteren Elementen, umfasst.

4. Verfahren nach einem der Ansprüche 1 bis 3, wobei die positive Elektrode (22) eine Aktivmaterialzusammensetzung (40) umfasst, welche mindestens das mindestens ein Aktivmaterial (42) und das Wasserstoff-absorbierende Material (50) enthält.

5. Verfahren nach Anspruch 4, wobei das Wasserstoff-absorbierende Material (50) als Beschichtung auf mindestens einem Teil der Oberfläche der weiteren Bestandteile der Aktivmaterialzusammensetzung (40) der positiven Elektrode (22) aufgebracht ist.

6. Verfahren nach Anspruch 4, wobei das Wasserstoff-absorbierende Material (50) in Form von Partikel in der Aktivmaterialzusammensetzung (40) der positiven Elektrode (22) enthalten ist.

7. Verfahren nach einem der Ansprüche 1 bis 3, wobei das Wasserstoff-absorbierende Material (50) auf mindestens einem Teil einer Oberfläche der positiven Elektrode (22) angeordnet ist.

8. Verfahren nach einem der Ansprüche 1 bis 7, wobei das elektrische Potential der positiven Elektrode (22) durch einen Potentialsprung oder einen Potentialsweep abgesenkt wird.

9. Verfahren nach einem der Ansprüche 1 bis 8, wobei die Absenkung des elektrischen Potentials der positiven Elektrode (22) vor dem ersten Aufladen der elektrochemischen Zelle (1) durchgeführt wird.

10. Elektrochemische Zelle (1) umfassend mindestens eine negative Elektrode (21), mindestens eine positive Elektrode (22), mindestens einen Separator (15) und mindestens einen Elektrolyt (16), wobei
die mindestens eine negative Elektrode (21) mindestens einen Stromsammler (31) und mindestens ein Aktivmaterial (41) umfasst, welches mindestens ein Alkali- und/oder Erdalkalimetall enthält;
die mindestens eine positive Elektrode (22) mindestens einen Stromsammler (32), mindestens ein Aktivmaterial (42) und mindestens ein Wasserstoff-absorbierendes Material (50) umfasst;
der mindestens eine Separator (15) zwischen der mindestens einen negativen Elektrode (21) und der mindestens einen positiven Elektrode (22) angeordnet ist; und
der mindestens eine Elektrolyt (16) eine ionenleitfähige Verbindung zwischen der mindestens einen negativen Elektrode (21) und der mindestens einen positiven Elektrode (22) bereitstellt.

11. Verfahren zur Herstellung eine elektrochemischen Zelle (1) nach Anspruch 10, wobei das Wasserstoff-absorbierende Material (50) mittels eines physikalischen Dampfphasenabscheidungsverfahrens (PVD), eines chemischen Dampfphasenabscheidungsverfahrens (CVD), eines Sprühverfahrens und/oder eines Sputtering-Verfahrens auf mindestens einen Teil einer Oberfläche der positiven Elektrode (22) der elektrochemischen Zelle (1) aufgebracht und/oder in Form von Partikeln oder einer Partikelbeschichtungen in mindestens einen Teil der positiven Elektrode (22) der elektrochemische Zelle (1) eingebracht wird.

12. Verwendung einer elektrochemischen Zelle (1) nach Anspruch 10, zur Durchführung eines Verfahrens nach einem der Ansprüche 1 bis 9.
